(19) **Europäisches Patentamt / European Patent Office / Office européen des brevets**

(11) **EP 1 492 187 B1**

(12) **EUROPEAN PATENT SPECIFICATION**

(45) Date of publication and mention of the grant of the patent:
**21.11.2012 Bulletin 2012/47**

(21) Application number: **03745408.9**

(22) Date of filing: **07.03.2003**

(51) Int Cl.:
**H01M 8/02** (2006.01)

(86) International application number:
**PCT/JP2003/002707**

(87) International publication number:
**WO 2003/083980 (09.10.2003 Gazette 2003/41)**

(54) **CORROSION RESISTANT METAL SEPARATOR FOR FUEL CELL**

**KORROSIONSBESTÄNDIGER METALL-SEPARATOR FÜR EINE BRENNSTOFFZELLE**

**SÉPARATEUR MÉTALLIQUE ANTI-CORROSIF POUR PILE À COMBUSTIBLE**

(84) Designated Contracting States:
**DE GB**

(30) Priority: **29.03.2002 JP 2002094027**

(43) Date of publication of application:
**29.12.2004 Bulletin 2004/53**

(73) Proprietor: **HONDA GIKEN KOGYO KABUSHIKI KAISHA**
**Minato-ku,**
**Tokyo 107-8556 (JP)**

(72) Inventors:
• **Utsunomiya, Masao**
**c/o Kabushiki Kaisha, Honda Gijutsu Kenkyusho**
**Wako-shi, Saitama 351-0193 (JP)**
• **Tsuji, Makoto**
**c/o Kabushiki Kaisha, Honda Gijutsu Kenkyusho**
**Wako-shi, Saitama 351-0193 (JP)**
• **Ohtani, Teruyuki**
**c/o Kabushiki Kaisha, Honda Gijutsu Kenkyusho**
**Wako-shi, Saitama 351-0193 (JP)**

(74) Representative: **Böhm, Brigitte et al**
**Weickmann & Weickmann**
**Patentanwälte**
**Postfach 86 08 20**
**81635 München (DE)**

(56) References cited:
EP-A- 1 046 723        EP-A- 1 107 340
EP-A- 1 137 089        DE-A1- 19 937 255
JP-A- 2000 323 152     JP-A- 2000 328 200
JP-A- 2001 032 056     JP-A- 2001 093 538
JP-A- 2001 214 286     JP-A- 2001 297 777
JP-A- 2003 123 781     JP-A- 2003 173 794

## Description

Technical Field

The present invention relates to a metallic separator for polymer electrolyte fuel cells and to a process of preparation thereof.

Background Art

A unit of a polymer electrolyte fuel cell is formed by laminating separators at both sides of a tabular membrane electrode assembly (MEA), and then the plural units are laminated to form a fuel cell stack. The membrane electrode assembly is a three-layered structure in which an electrolyte membrane composed of ion exchange resin or the like is arranged between a pair of gas diffusion electrodes forming the cathode and the anode. The gas diffusion electrode is a structure in which a gas diffusion layer is formed on an outer surface of an electrode catalytic layer contacting the electrolyte membrane. The separator is laminated to contact with the gas diffusion layer of the membrane electrode assembly, and a gas passage, in which gas flows, and a refrigerant passage, are formed between the gas diffusion electrode and the separator. In such a fuel cell, hydrogen gas, supplied through a gas passage facing a gas diffusion electrode of the anode, and oxidizing gas such as air or oxygen supplied through a gas passage facing a gas diffusion electrode of the cathode, electrochemically react and thereby generate electricity.

The separator supplies electrons generated by catalytic reaction of hydrogen gas at the anode side to an external circuit, whereas the separator must have a function for supplying electrons from the external circuit to the cathode. Therefore, a conductive material including, for example, a graphite-based material or a metal-based material is used as the separator. In particular, the metal-based material is advantageous since it is superior in mechanical strength, and weight and size can be reduced by reducing the thickness of the metallic plate. A metallic separator in which a thin plate of stainless steel or titanium alloy having high corrosion resistance is pressed to have an uneven cross section can be used.

In the case of a stainless steel separator, contact resistance with a membrane electrode assembly is greater than the contact resistance of a graphite-based separator and the membrane electrode assembly. Since increase of the contact resistance causes deterioration of power generating efficiency, the surface is covered with gold by a method such as plating or the like to reduce the contact resistance. However, in this case, large amounts of gold are used and the production costs are too high. Furthermore, when gold is plated on a stainless steel, the stainless steel is plated with nickel beforehand to improve adhesiveness as a surface preparation. However, if there are defects such as pinholes on the gold plating, the nickel component of the surface preparation will elute. The elution of nickel causes efficiency deterioration such as reduction of the amount of ions exchanged in the membrane electrode assembly, and furthermore, causes separation of gold plating and increases contact resistance. If the surface preparation is not performed and gold is plated directly on the stainless steel to avoid such problems, adhesiveness of gold plating is reduced, resulting in separation. Also in this case, contact resistance is increased.

EP 1 137 089 discloses a fuel cell gas separator and a manufacturing method thereof. Sufficient corrosion resistance of the fuel gas separator can be ensured by forming on the separator a noble metal layer formed from gold and coating the noble metal coating layer with a carbon coating layer containing carbon materials.

Disclosure of Invention

Therefore, an object of the present invention is to provide a metallic separator for a fuel cell and process of preparation thereof in which the reducing effect of contact resistance by a gold coating due to the gold coating or the like can be sufficiently exhibited, and in which production cost can be reduced by reducing the amount of gold which is used. The present invention is defined by the appended set of claims.

In the metallic separator for a fuel cell of the present invention, conductive inclusions are exposed on the surface having corrosion resistance, and gold is selectively precipitated on the exposed conductive inclusions by electrodeposition. In the present invention, gold is precipitated only on the conductive inclusions which are exposed on the surface. The conductive inclusions reduce contact resistance by forming conductive passages. Since no oxide skin is formed on the conductive inclusions, adhesiveness with gold is extremely high. Therefore, separation of the gold can be prevented, and the contact resistance is further reduced. Furthermore, since gold is precipitated only at the conductive inclusions, the amount of gold which is used can be reduced, lowering the production cost.

The present invention includes an aspect in which the conductive inclusions protrude from the surface of the separator. In the aspect, the contacted ratio of the conductive inclusion to the membrane electrode assembly is increased, and the contact resistance can be further reduced.

Next, a process for production of a metallic separator for a fuel cell of the present invention can produce the separator mentioned above. In the process, a surface preparation such as a nickel plating is not performed, and gold is directly plated on a material plate on which the conductive inclusions are exposed from the surface having corrosion resistance by electrodeposition. In this way, by performing gold plating directly on the surface of the material plate without performing the surface preparation, elution of the substrate does not occur even if there are defects such as pinholes on the gold plate.

Therefore, the gold plate is hardly separated, and a reduced contact resistance can be maintained.

As a metallic material of the present invention, a stainless steel plate having the conductive inclusions which form conductive passages is desirably used. Specifically, a stainless steel having composition mentioned below is desirably used. That is, the steel contains C: not more than 0.15 wt%, Si: 0.01 to 1.5 wt%, Mn: 0.01 to 2.5 wt%, P: not more than 0.035 wt%, S: not more than 0.01 wt%, Al: 0.001 to 0.2 wt%, N: not more than 0.3 wt%, Cu: 0 to 3 wt%, Ni: 7 to 50 wt%, Cr: 17 to 30 wt%, Mo: 0 to 7 wt%, and the remainder is Fe, B, and inevitable impurities. Furthermore, Cr, Mo, and B fulfill the following formula.

$$\text{Cr (wt\%)} + 3 \times \text{Mo (wt\%)} - 2.5 \times \text{B (wt\%)} \geq 17$$

On the surface of the stainless steel plate, B is precipitated as a boride of the $M_2B$ type, the MB type, and the $M_{23}(C,B)_6$ type. These borides are the conductive inclusions.

Brief Description of Drawings

Fig. 1 is a photograph showing a separator produced in an Example of the present invention.

Fig. 2 is a SEM photograph showing a separator of an Example.

Fig. 3 is a graph showing the relationship of the amount of gold per unit area and contact resistance in the separator of an Example and a Comparative Example.

Fig. 4 is a graph showing the change in the contact resistance after current flows in the separator of Example 1 for a long time.

Fig. 5 is a graph showing the change in the contact resistance after current flows in the separator of Comparative Example for a long time.

Fig. 6 is a graph showing the change in the contact resistance after current flows in the separator of Example 2 for a long time.

Best Mode for Carrying Out the Invention

Examples of the present invention are explained.

(1) Production of separator

Example 1

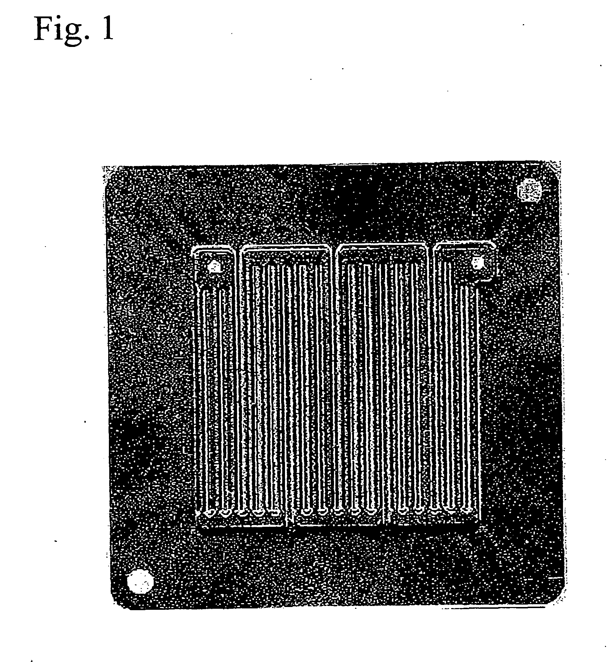

An austenitic stainless steel plate having components shown in Table 1 was rolled until the thickness become 0.2 mm. The necessary number of square thin plates having dimensions of 100 mm x 100 mm were cut out of the rolled steel. These thin plates were press formed to obtain material plates for separators shown in Fig. 1. This material plate has a power generating part whose cross section is of uneven shape at the center, and an even edge part around the power generating part. Furthermore, in the material plate, component B is precipitated as borides of the $M_2B$ type, the MB type, and the $M_{23}(C, B)_6$ type in the metallo graphic structure. These borides are the conductive inclusions which form conductive passages on the surface of the separator.

Table 1

| | | | | | | | | | | | | | (wt%) |
|---|---|---|---|---|---|---|---|---|---|---|---|---|---|
| C | Si | Mn | P | S | Cu | Ni | Cr | Mo | Nb | Ti | Al | N | B |
| 0.073 | 0.28 | 0.13 | 0.015 | 0.001 | 0.11 | 10.1 | 20.9 | 2.03 | - | - | 0.08 | 0.030 | 0.60 |

Next, both surfaces of the material plates were passivated to form a strong oxide layer. The passivating treatment was performed by degreasing and washing the material plate in acetone for 10 minutes, and then immersing in a 50 wt% nitric acid bath at 50°C for 10 minutes. After the passivating treatment, the material plate was washed twice with water at ordinary temperature for 10 minutes and was dried. Next, both surfaces of the material plates were plated with gold. The gold plating treatment was performed by immersing in a plating bath of gold cyanide in which current density was set at 0.1 A/dm$^2$ and the temperature was maintained at 30°C. In this case, immersion time was varied for 6 periods such as 1 minute, 2 minutes, 3 minutes, 4 minutes, 7 minutes, and 10 minutes. Amount of gold per unit area increased as the immersion time increased. After the gold plating, the material plates were washed with water twice at ordinary temperature for 10 minutes, to obtain 6 kinds of separators of Example 1. Conductive inclusions are exposed on the surface of the separators of Example 1, although the conductive inclusions did not protrude.

Example 2

A material plate was obtained in a manner similar to that as in Example 1, except that conductive inclusions were made to protrude by removing 5 μm of both surfaces of the material plate by etching with iron chloride. Gold plating was performed on the material plate in the same way as in Example 1 to obtain separators of Example 2. In this case, the gold plating was performed for 10 minutes.

Comparative Example

6 kinds of separators of the Comparative Example were obtained in a manner similar to that of as in Example 1, except that SUS316L in which conductive inclusions were not precipitated was used as a raw material, and except that a treatment in which the raw material was immersed in 10% hydrochloric acid at 30°C for 10 minutes to remove surface oxide layer was performed instead of the passivating treatment after the material plate was degreased and washed with acetone for 10 minutes.

B. Surface observation

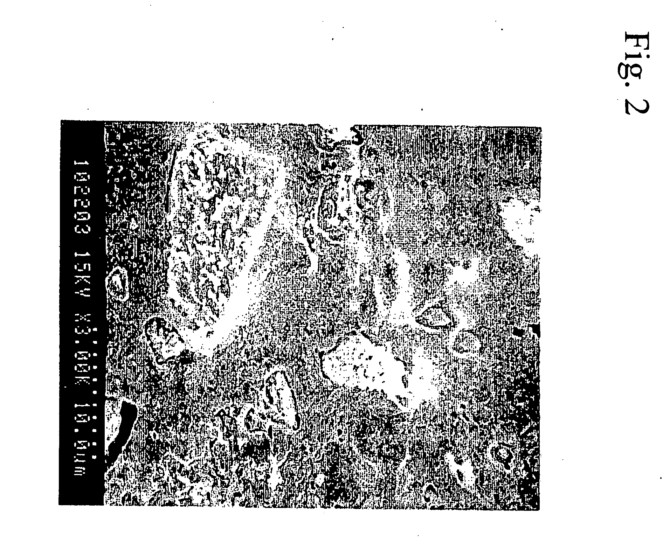

The surface of one separator of Example 1 in which gold plating was performed for 10 minutes was observed using an electron microscope. Fig. 2 is a SEM photograph showing the surface. It is clear that particulate gold is preferentially precipitated on the conductive inclusions which are dispersively precipitated on the surface of base metal by the gold plating.

C. Measurement of amount of gold per unit area

Amount of gold per unit area of six separators of Example 1 and six separators of the Comparative Example were measured as follows. The separators of Example 1 and the Comparative Example were dissolved in nitro hydrochloric acid, and the amount of gold contained in the solution was quantatively analyzed by an inductively coupled plasma emission spectrometer (trade name: SPS-4000, produced by Seiko Instruments Inc.), and the amount of gold per unit area was calculated based on the analyzed value. The results are shown in Table 2 (for Example 1) and Table 3 (for the Comparative Example).

Table 2

| (Example) | | |
|---|---|---|
| Treating time of gold plating (minutes) | Amount of gold per unit area (mg/cm$^2$) | Contact resistance (mΩcm$^2$) |
| 1 | 0.0008 | 17.6 |
| 2 | 0.0012 | 10.2 |
| 3 | 0.0026 | 7.5 |
| 4 | 0.0041 | 6.9 |
| 7 | 0.0099 | 6.4 |
| 10 | 0.0202 | 6 |

Table 3

| (Comparative Example) | | |
|---|---|---|
| Gold plating treatment time (minutes) | Amout of gold per unit area (mg/cm$^2$) | Contact resistance (m$\Omega$cm$^2$) |
| 1 | 0.0007 | 30 |
| 2 | 0.0011 | 20.7 |
| 3 | 0.0025 | 16.5 |
| 4 | 0.0042 | 12 |
| 7 | 0.0103 | 8 |
| 10 | 0.0205 | 7.7 |

D. Measurement of initial contact resistance

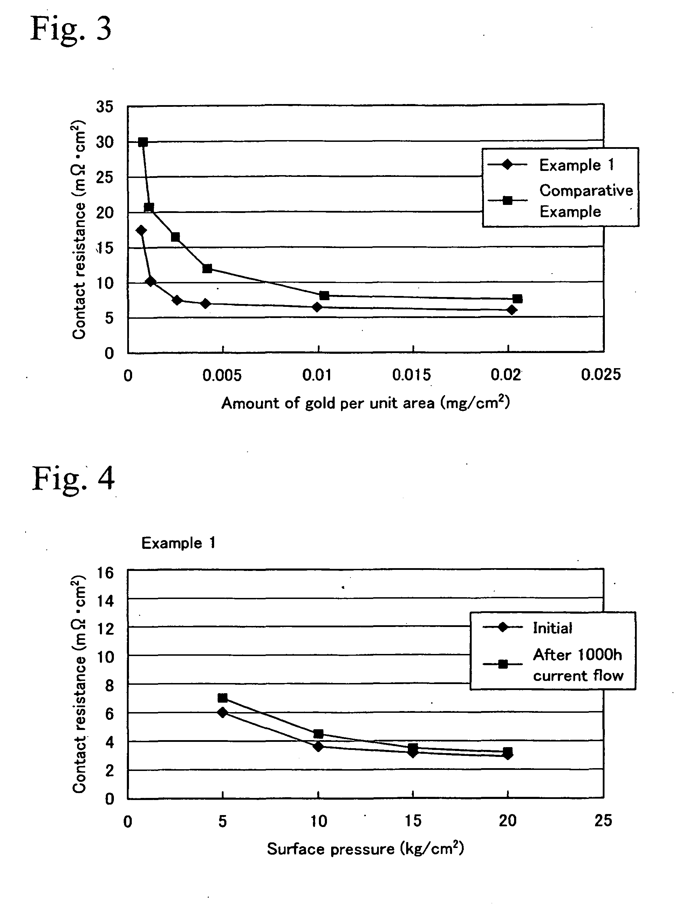

Initial contact resistance of six kinds of separators of Example 1 and the Comparative Example were measured as follows. A carbon paper which forms a surface of a gas diffusion layer of a membrane electrode assembly was put between two separators, and this was put between two electrode plates. This testing body was pressed until the surface pressure of the separator to the electrode plate reached 5 kg/cm$^2$. Current was passed between two electrode plates, and contact resistance was calculated based on the voltage drop between separators. Table 2 and Fig. 3 show the results. It is clear that the separator of Example 1 shows lower contact resistance when the amount of gold is the same. Furthermore, it is clear that the contact resistance can be extremely reduced if the amount of gold is not less than 0.0026 mg/cm$^2$ per unit area.

E. Measurement of contact resistance after long current flow

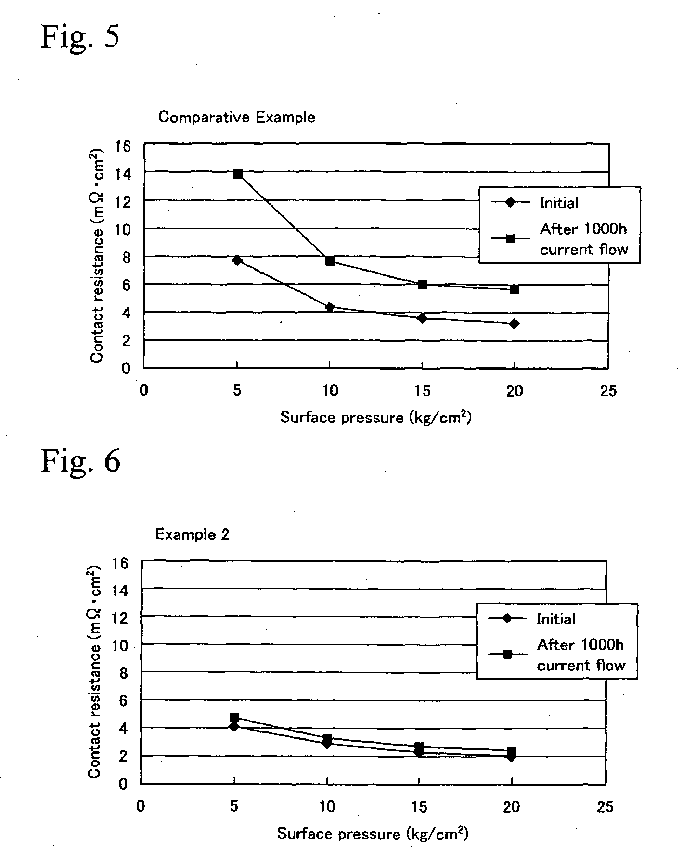

Using the separators of Example 1 in which the amount of gold per unit area was 0.0202 mg/cm$^2$ and the separators of the Comparative Example in which the amount of gold per unit area was 0.0205 mg/cm$^2$, test pieces in which the surface pressure of the separator to the electrode plate is 5 kg/cm$^2$, 10 kg/cm$^2$, 15 kg/cm$^2$, and 20 kg/cm$^2$ were prepared. Initial contact resistance and contact resistance after 1000 hours of current passing were measured in the same way as described above. Fig. 4 shows contact resistance in the case of the separator of Example 1, and Fig. 5 shows contact resistance in the case of the separator of the Comparative Example. As is clear from these figures, contact resistance was barely increased after 1000 hours of current flowing in the case of the separator of Example 1, contact resistance of the separator of the Comparative Example was increased after 1000 hours of current flow.

F. Measurement of contact resistance of separator in which conductive inclusions are protruded

Using the separators of Example 2, test pieces under four kinds of surface pressures were prepared in the same way as described above, and initial contact resistance and contact resistance after 1000 hours current energizing were measured. Fig. 6 shows the results. The separators of Example 2 exhibited lower contact resistance than the separators of Example 1. It is believed that the reason for this is that the conductive inclusions are protruded from the surface of the separator in contact with carbon paper more than that of Example 1. In this way, it is clear that by protruding the conductive inclusions, contact resistance can be greatly reduced.

As explained above, in the present invention, since the conductive inclusions are exposed on the surface having corrosion resistance, and since the gold is selectively precipitated on the exposed conductive inclusions, contact resistance can be efficiently reduced. Furthermore, by reducing the amount of gold which is used, the production cost can also be reduced.

**Claims**

1. A metallic separator for a fuel cell, comprising:

   a plate having a surface with corrosion resistance which was passivated to form an oxide layer; and
   conductive inclusions exposed on the surface of the plate, wherein no oxide layer is formed on the conductive inclusions,

wherein gold is selectively precipitated on the exposed conductive inclusions by electrodeposition.

2. The metallic separator for a fuel cell, according to claim 1, wherein the conductive inclusions are protruded from the surface of the plate.


**Patentansprüche**

1. Metallischer Separator für eine Brennstoffzelle umfassend eine Platte, die eine korrosionsbeständige Oberfläche aufweist, welche passiviert wurde, um eine Oxidschicht zu bilden; und
leitende Einschlüsse, die auf der Plattenoberfläche exponiert sind, wobei keine Oxidschicht auf den leitenden Einschlüssen gebildet ist,
wobei Gold selektiv auf den exponierten, leitenden Einschlüssen durch galvanische Abscheidung abgeschieden wird.

2. Metallischer Separator für eine Brennstoffzelle nach Anspruch 1, wobei die leitenden Einschlüsse aus der Plattenoberfläche herausragen.


**Revendications**

1. Séparateur métallique pour une pile à combustible, comprenant:

une plaque présentant une surface résistant à la corrosion qui a été passivée afin de former une couche d'oxyde; et
des inclusions conductrices exposées sur la surface de la plaque, dans lequel aucune couche d'oxyde n'est formée sur les inclusions conductrices,
dans lequel de l'or est précipité de façon sélective sur les inclusions conductrices exposées par électrodéposition.

2. Séparateur métallique pour une pile à combustible selon la revendication 1, dans lequel les inclusions conductrices font saillie à partir de la surface de la plaque.

Fig. 1

# Fig. 2

102203 15KV X3.00K 10.0um

# Fig. 3

# Fig. 4

## Fig. 5

Comparative Example

## Fig. 6

Example 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1137089 A